# EUROPÄISCHE PATENTSCHRIFT

(11) **EP 1 620 660 B1**
(45) Veröffentlichungstag und Bekanntmachung des Hinweises auf die Patenterteilung: **06.01.2010**
(21) Anmeldenummer: 04729824.5
(22) Anmeldetag: 28.04.2004
(51) Int. Cl.: F16G 15/02

(54) **KETTENSCHLOSS**
CHAIN LOCK
JOINT DE CHAINE

(30) Priorität: 02.05.2003 DE 10320693
(43) Veröffentlichungstag der Anmeldung: 01.02.2006
(73) Patentinhaber: RUD Ketten Rieger & Dietz GmbH u. Co. KG, 73432 Aalen (DE)
(72) Erfinder: NUDING, Andreas, 73312 Geislingen (DE); LANG, Werner, 73463 Westhausen-Lippach (DE); DALFERTH, Hans, 73433 Aalen-wasseralfingen (DE)
(74) Vertreter: Grünecker, Kinkeldey, Stockmair & Schwanhäusser Anwaltssozietät
(86) Internationale Anmeldenummer: PCT/DE2004/000922
(87) Internationale Veröffentlichungsnummer: WO 2004/097253

(56) Entgegenhaltungen:
- DE-U- 8 320 392
- DE-U- 29 811 332
- FR-A- 2 333 170

## Beschreibung

### Technisches Gebiet

Die Erfindung betrifft ein Kettenschloss für Gliederketten mit zwei in Längsrichtung des Schlosses zum Öffnen und Schließen des Schlosses um begrenzte Beträge zueinander verschiebbaren Schlossteilen, die jeweils zwei über einen Längssteg miteinander verbundene Enden aufweisen, von denen jeweils eines einen Zapfen mit einem sich über einen Teil des Zapfenumfangs erstreckenden Haltesteg bildet und eines mit einer zur Aufnahme des Zapfens dienenden, eine Haltenut für den Haltesteg aufweisenden Tasche versehen ist.

### Stand der Technik

Ein Kettenschloss der vorstehenden Art ist aus DE-PS 23 54 028 bekannt. Bei dem bekannten Kettenschloss ist der Haltezapfen mit einem einzelnen Haltesteg und die Tasche mit einer einzigen dem Haltesteg zugeordneten Haltenut versehen, wobei die zur Übertragung von Querkräften dienende Stützfläche des Haltesteges und die mit ihr zusammenwirkende Gegenfläche der Haltenut parallel zur Längsmittelebene des Schlosses und leicht zu dieser versetzt verlaufen. Wie sich in der Praxis gezeigt hat, ist der Haltesteg mit zunehmender statischer und dynamischer Belastung der am stärksten beanspruchte Teil des Kettenschlosses. Diesem Umstand Rechnung tragend ist in der DE 26 38 443 vorgeschlagen worden, die Haltestege und Haltenuten schräg auszubilden, um auf diese Weise eine Vergrößerung des Querschnitts des Haltezapfens zu erzielen. Eine spürbare Verbesserung der Festigkeit ist auf diese Weise jedoch selbst dann nicht zu erreichen, wenn man der Lehre der DE 77 05 179 U folgend die Verbindungsstelle - wie an sich schlüssig - in einem Bereich der Enden der Schlossteile anordnet, in dem die Spannungsverteilung vergleichsweise ausgeglichen ist. Der Grund für das Ausbleiben des angestrebten Erfolges einer verbesserten statischen und dynamischen Festigkeit dürfte in den zuletzt genannten Fällen darin zu suchen sein, dass durch die Schräglage des Haltesteges und der Haltenut der Anteil der Zugkräfte, die vom zum Innern des Schlosses gerichteten Ende des Haltesteges aufzunehmen sind, Werte annimmt, die zum Abriss des Haltesteges im vorgenannten Bereich führen.

Bekannt sind darüber hinaus Kettenschlösser, welche im Bereich ihrer Längsstege Mittel aufweisen, die verhindern sollen, dass es in diesem Bereich zu einem Einschnüreffekt kommt. Diese Mittel werden bei aus der DE 298 11 332 U und der DE 199 14 014 C2 bekannten Kettenschlössem von in das Innere des Schlosses ragenden Stützelementen gebildet, die sich entweder unmittelbar oder unter Zwischenschaltung eines zusätzlichen Elementes aufeinander abstützen. Im Falle des Kettenschlosses nach der DE 298 11 332 U1 hintergreifen sich die Stützelemente zusätzlich, um zur Querfestigkeit des Kettenschlosses beizutragen. Ein ähnlicher Effekt wird bei einem aus der DE 83 20 392 U bekannten Kettenschloss angestrebt, das aus zwei C-förmigen Schlossteilen besteht, die zusätzlich zu jeweils einem im Bereich der Buge des Kettenschlosses angeordneten Zapfen-Taschen-Paar im Bereich des Zentrums der Längsstege des Kettenschlosses mit einem weiteren Zapfen-Taschen-Paar versehen sind. Alle drei zuletzt beschriebenen Kettenschlösser vermögen insofern nicht voll zu befriedigen, als die zusätzliche zentrale Abstützung einen deutlich erhöhten Fertigungsaufwand erfordert und die im Zentrum des Schlosses getroffenen Vorkehrungen sich zudem nicht zur nachhaltigen Reduzierung der auf den jeweils einzigen Haltesteg der Zapfen in den Bugbereichen der Kettenschlösser einwirkenden Spannungen führen.

### Darstellung der Erfindung

Der Erfindung liegt die Aufgabe zugrunde, bei einem Kettenschloss der in Betracht gezogenen Gattung durch eine optimierte Verteilung der unter Last im Schloss auftretenden Kräfte und Spannungen eine Steigerung der statischen und dynamischen Festigkeit zu erzielen. Gelöst wird die gestellte Aufgabe erfindungsgemäß dadurch, dass die Höhe des Zapfens und der Tasche gleich der inneren Breite des Schlosses ist und dass der Zapfen mehrere übereinander angeordnete Haltestege und die Tasche mehrere übereinander angeordnete Haltenuten aufweist.

Die mehrstufige Ausbildung der Zapfen und Taschen und die Wahl einer gegenüber den bekannten Konstruktionen größeren Höhe der Zapfen und Taschen führt zu einer ausgeglichenen und günstigen Verteilung der Spannungen und insbesondere der Querkräfte im Kupplungsbereich der Schlossteile und ermöglicht dadurch die angestrebte Festigkeitssteigerung.

Weitere Merkmale und Einzelheiten der Erfindung ergeben sich aus den Unteransprüchen und der nachstehenden Beschreibung einer in den beigefügten Zeichnungen dargestellten, besonders vorteilhaften Ausführungsform der Erfindung.

### Kurze Beschreibung der Zeichnungen

Es zeigen:
Fig. 1 die perspektivische Ansicht eines von zwei identischen Schlossteilen
Fig. 2 teilweise im Schnitt die Seitenansicht des Schlossteiles gemäß Fig. 1
Fig. 3 einen Schnitt längs der Linie III-III in Fig. 2
Fig. 4 die Draufsicht auf das Schlossteil gemäß Fig. 2
Fig. 5 zwei Schlossteile in einer ersten Position
Fig. 6 die Schlossteile gemäß Fig. 5 in einer zweiten Position und
Fig. 7 die Schlossteile gemäß Fig. 5 in ihrer Endposition.

### Wege zur Ausführung der Erfindung

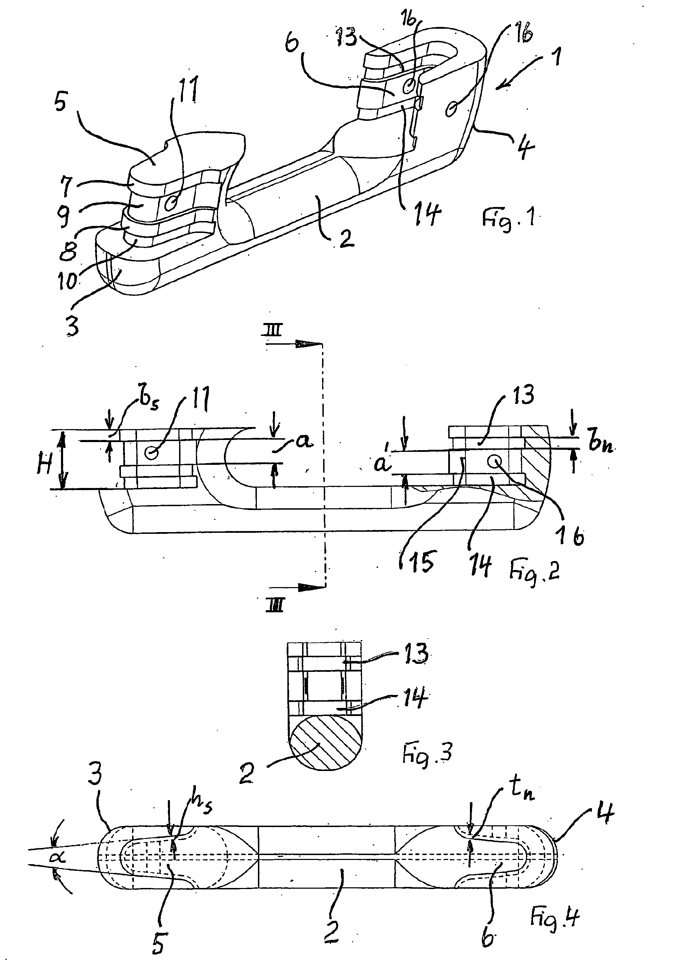

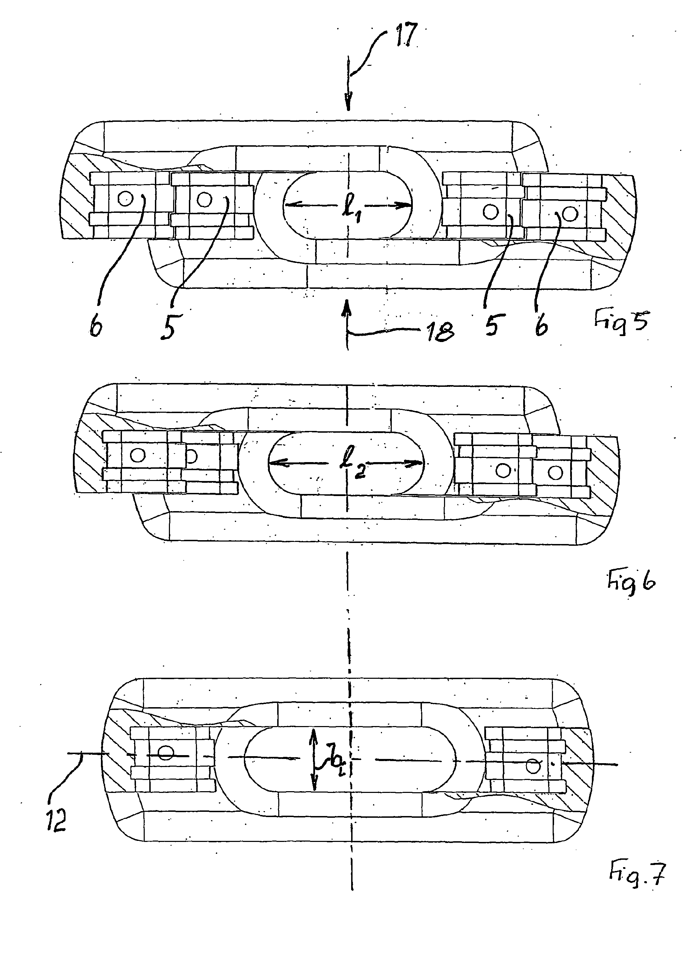

Das in den Figuren 1 bis 4 dargestellte Schlossteil 1 weist zwei über einen Längsschenkel 2 verbundene Enden 3 und 4 auf, von denen das Ende 3 mit einem Zapfen 5 und das Ende 4 mit einer Tasche 6 zur Aufnahme des Zapfens 5 ausgestattet ist. Der Zapfen 5 ist mit zwei Haltestegen 7 und 8 ausgestattet, die auf ihrer gesamten Länge etwa 2 bis 6 mm über die halsförmigen Abschnitte 9 und 10 des Zapfens 5 vorstehen. Die Höhe H des Zapfens 5 entspricht im wesentlichen der inneren Breite bᵢ des montierten Kettenschlosses (vgl. Fig. 2 und 7). Die Verwendung eines Zapfens 5 mit nur zwei Haltestegen 7, 8 erweist sich vor allem bei kleineren und mittleren Schlossgrößen nicht zuletzt aus wirtschaftlichen Überlegungen als sinnvoll.

Der Abstand a zwischen den Haltestegen 7, 8 ist größer als die Breite bₛ der Haltestege 7, 8. Aufgrund des vergleichsweise großen Abstandes a zwischen den Haltestegen 7, 8 ist hinreichend Platz für die Anbringung einer Querbohrung 11 zur Aufnahme eines in der Zeichnung nicht dargestellten Sicherungstiftes vorhanden. Die unter Last am stärksten bruchgefährdeten, bogenförmigen Abschnitte der Haltestege 7, 8 liegen in außerhalb der Längsmittenebene 12 gelegenen Bereichen, d. h. in Zonen, in denen die auf die Haltestege 7, 8 einwirkenden Querkräfte niedriger als in der Längsmittenebene sind.

Die zur Aufnahme des Zapfens 5 eines zweiten Schlossteiles 1 dienende Tasche 6 weist Haltenuten 13, 14 auf, deren Breite bₙ im wesentlichen der Breite bₛ der Haltestege 7, 8 entspricht, d. h. bₙ ist ebenso wie der Abstand a' zwischen den Haltenuten 13, 14 nur wenig größer als die Breite bₛ bzw. der Abstand a, so dass im montierten Zustand des Kettenschlosses von einer praktisch spielfreien Verbindung zwischen den Zapfen und den Taschen ausgegangen werden kann. Im Bereich des Abschnittes 15 der Tasche 6 ist eine Querbohrung 16 vorgesehen, die im montierten Zustand des Schlosses mit der Querbohrung 11 eines in die Tasche 6 eingeführten Zapfens 5 fluchtet.

Sowohl der Zapfen 5 als auch die Tasche 6 haben einen sich zum Inneren des Schlossteiles 1 verbreiternden Querschnitt. Wie aus Fig. 4 ersichtlich, schließen die Flanken des Zapfens 5 und die Innenwände der Tasche 6 einen Winkel α zwischen sich ein. Dieser Winkel α beträgt vorzugsweise 10 bis 30°, kann aber auch kleiner sein. Die keilförmige Ausbildung des Zapfens 5 und die hierauf abgestimmte Form der Tasche 6 erweisen sich insofern als vorteilhaft, weil sie das Lösen des Schlosses nach längerer Einsatzzeit und der hieraus regelmäßig resultierenden Bildung von Passungsrost außerordentlich erleichtert, es genügt nämlich ein vergleichsweise leichter Hammerschlag gegen eines der Schlossteile, um letztere voneinander zu trennen.

Die Keilform hat zudem einen weiteren positiven Effekt, der anhand der Figuren 5 und 6 erläutert wird. Fig. 5 zeigt zwei identische Schlossteile in einer Position, die sie beim Zusammenfügen in Richtung der Pfeile 17, 18 einnehmen müssten, wenn die Flanken der Zapfen 5 und die Innenwände der Taschen 6 parallel zueinander verlaufen würden. In Fig. 6 sind hingegen die Verhältnisse erkennbar, die ein Zusammenfügen in Richtung der Pfeile 17, 18 aufgrund der keilförmigen Ausbildung des Zapfens 5 und der Tasche 6 erlauben. Durch die keilförmige Ausbildung der Flanken des Zapfens und der Seitenwände der Tasche lässt sich das Maß I₁ in Fig. 5 auf einen Wert I₂ steigern. Diese Steigerung erleichtert in der Praxis die Montage des Schlosses erheblich.

## Patentansprüche

1. Kettenschloss für Gliederketten mit zwei in Längsrichtung des Schlosses zum Öffnen und Schließen des Schlosses um begrenzte Beträge zueinander verschiebbaren Schlossteilen (1), die jeweils zwei über einen Längssteg (2) miteinander verbundene Enden aufweisen, von denen jeweils eines einen Zapfen (5) mit einem sich über einen Teil des Zapfenumfangs erstreckenden Haltesteg (7) bildet und eines mit einer zur Aufnahme des Zapfens (5) dienenden, eine Haltenut (13) für den Haltesteg (7) aufweisenden Tasche (6) versehen ist, **dadurch gekennzeichnet, dass** die Höhe (H) des Zapfens (5) und der Tasche (6) gleich der inneren Breite (bᵢ) des Schlosses ist und dass der Zapfen (5) mehrere übereinander angeordnete Haltestege (7, 8) und die Tasche (6) mehrere übereinander angeordnete Haltenuten (13, 14) aufweiset.

2. Kettenschloss nach Anspruch 1, **dadurch gekennzeichnet, dass** der Abstand (a bzw. a') zwischen den Haltestegen (7, 8) und den Haltenuten (13, 14) gleich der Breite (bₛ bzw. bₙ) der Haltestege (7, 8) und der Haltenuten (13, 14) ist.

3. Kettenschloss nach Anspruch 1, **dadurch gekennzeichnet, dass** der Abstand (a bzw. a') zwischen den Haltestegen (7, 8) und den Haltenuten (13, 14) größer als die Breite (bₛ bzw. bₙ) der Haltestege (7, 8) und der Haltenuten (13, 14) ist.

4. Kettenschloss nach einem der Ansprüche 1 bis 3, **dadurch gekennzeichnet, dass** der Zapfen (5) zwei Haltestege (7, 8) und die Tasche (6) zwei Haltenuten (13, 14) aufweist.

5. Kettenschloss nach einem der Ansprüche 1 bis 3, **dadurch gekennzeichnet, dass** der Zapfen (5) und die Tasche (6) mit jeweils einer zur Aufnahme eines auch zur Kraftübertragung nutzbaren Sicherungselements dienenden Querbohrung (11, 16) versehen sind.

6. Kettenschloss nach einem der Ansprüche 1 bis 5, **dadurch gekennzeichnet, dass** der Zapfen (5) und die Tasche (6) einen sich in Längsrichtung des Schlosses durchgehend verbreiternden bzw. erweiternden Querschnitt aufweisen.

7. Kettenschloss nach Anspruch 6, **dadurch gekennzeichnet, dass** die Flanken der Haltestege (7, 8) keilförmig ausgebildet sind und die den Flanken der Haltestege (7, 8) zugewandten Seitenwandabschnitte der Haltenuten (13, 14) eine dem Keilwinkel (α) entsprechende Schräge aufweisen.

8. Kettenschloss nach einem der Ansprüche 1 bis 7, **dadurch gekennzeichnet, dass** die Flanken des Zapfens (5) und die Seitenwände der Tasche (6) jeweils einen Winkel (α) von 10 bis 30° einschließen.

9. Kettenschloss nach einem der Ansprüche 1 bis 8, **dadurch gekennzeichnet, dass** die Tiefe (tₙ) der die Haltestege (7, 8) im wesentlichen ohne Spiel aufnehmenden Haltenuten (13, 14) 2 bis 6 mm beträgt.

10. Kettenschloss nach einem der Ansprüche 1 bis 9, **dadurch gekennzeichnet, dass** die Höhe (hₛ) der Haltestege (7, 8) etwa 2 bis 6 mm beträgt.

## Claims

1. A chain lock for link chains with two lock parts (1) which can be displaced by limited amounts with respect to each other in the longitudinal direction of the lock in order to open and close the lock and in each case have two ends which are connected to each other via a longitudinal web (2) and of which respectively one forms a stud (5) having a retaining web (7) extending over part of the circumference of the stud and one is provided with a recess (6) serving to receive the stud (5) and having a retaining groove (13) for the retaining web (7), **characterized in that** the height (H) of the stud (5) and of the recess (6) is equal to the inner width (bᵢ) of the lock, and **in that** the stud (5) has a plurality of retaining webs (7, 8) arranged one above another and the recess (6) has a plurality of retaining grooves (13, 14) arranged one above another.

2. The chain lock as claimed in claim 1, **characterized in that** the distance (a and a', respectively) between the retaining webs (7, 8) and the retaining grooves (13, 14) is equal to the width (bₛ and bₙ, respectively) of the retaining webs (7, 8) and the retaining grooves (13, 14).

3. The chain lock as claimed in claim 1, **characterized in that** the distance (a and a', respectively) between the retaining webs (7, 8) and the retaining grooves (13, 14) is larger than the width (bₛ and bₙ, respectively) of the retaining webs (7, 8) and the retaining grooves (13, 14).

4. The chain lock as claimed in any one of claims 1 to 3, **characterized in that** the stud (5) has two retaining webs (7, 8) and the recess (6) has two retaining grooves (13, 14).

5. The chain lock as claimed in any one of claims 1 to 3, **characterized in that** the stud (5) and the recess (6) are respectively provided with a transverse hole (11, 16) serving to receive a securing element, which can also be used for transmission of force.

6. The chain lock as claimed in any one of claims 1 to 5, **characterized in that** the stud (5) and the recess (6) have a cross section which widens or expands continuously in the longitudinal direction of the lock.

7. The chain lock as claimed in claim 6, **characterized in that** the flanks of the retaining webs (7, 8) are of wedge-shaped design and those side wall sections of the retaining grooves (13, 14) which face the flanks of the retaining webs (7, 8) have a bevel corresponding to the wedge angle (α).

8. The chain lock as claimed in any one of claims 1 to 7, **characterized in that** the flanks of the stud (5) and the side walls of the recess (6) in each case enclose an angle (α) of 10 to 30°.

9. The chain lock as claimed in any one of claims 1 to 8, **characterized in that** the depth (tₙ) of the retaining grooves (13, 14), which receive the retaining webs (7, 8) essentially without play is 2 to 6 mm.

10. The chain lock as claimed in any one of claims 1 to 9, **characterized in that** the height (hₛ) of the retaining webs (7, 8) is approximately 2 to 6 mm.

## Revendications

1. Joint de chaîne pour des chaînes à maillons avec deux parties de joint (1) pouvant être décalées l'une par rapport à l'autre de valeurs limitées dans la direction longitudinale du joint pour l'ouverture ou la fermeture du joint, parties de joint qui comportent chacune deux extrémités, reliées l'une à l'autre par une barrette longitudinale (2), dont respectivement une forme un téton (5) avec une nervure de maintien (7) s'étendant sur une partie du pourtour du téton et une est dotée d'une poche (6), servant à la réception du téton (5), comportant une rainure de maintien (13) pour la nervure de maintien (7), **caractérisé en ce que** la hauteur (H) du téton (5) et de la poche (6) est égale à la largeur intérieure (bᵢ) du joint, et **en ce que** le téton (5) comporte plusieurs nervures de maintien (7, 8) disposées les unes au-dessus des autres et la poche (6) plusieurs rainures de maintien (13, 14) disposées les unes au-dessus des autres.

2. Joint de chaîne selon la revendication 1, **caractérisé en ce que** la distance (a, respectivement a') entre les nervures de maintien (7, 8) et les rainures de maintien (13, 14) est égale à la largeur (bₛ, respectivement bₙ) des nervures de maintien (7, 8) et des rainures de maintien (13, 14).

3. Joint de chaîne selon la revendication 1, **caractérisé en ce que** la distance (a, respectivement a') entre les nervures de maintien (7, 8) et les rainures de maintien (13, 14) est plus grande que la largeur (bₛ, respectivement bn) des nervures de maintien (7, 8) et des rainures de maintien (13, 14).

4. Joint de chaîne selon l'une quelconque des revendications 1 à 3, **caractérisé en ce que** le téton (5) comporte deux nervures de maintien (7, 8) et la poche (6) deux rainures de maintien (13, 14).

5. Joint de chaîne selon l'une quelconque des revendications 1 à 3, **caractérisé en ce que** le téton (5) et la poche (6) sont dotés respectivement d'un trou transversal (11, 16) servant à la réception d'un élément de sécurité utilisable aussi pour la transmission de la force.

6. Joint de chaîne selon l'une quelconque des revendications 1 à 5, **caractérisé en ce que** le téton (5) et la poche (6) présentent une section s'élargissant de manière continue dans la direction longitudinale du joint.

7. Joint de chaîne selon la revendication 6, **caractérisé en ce que** les flancs des nervures de maintien (7, 8) sont formées en forme de coin et que les sections des parois latérales des rainures de maintien (13, 14) tournées vers les flancs des nervures de maintien (7, 8) présentent une obliquité correspondant à l'angle du coin (α).

8. Joint de chaîne selon l'une quelconque des revendications 1 à 7, **caractérisé en ce que** les flancs du téton (5) et les parois latérales de la poche (6) limitent respectivement un angle (α) de 10 à 30°.

9. Joint de chaîne selon l'une quelconque des revendications 1 à 8, **caractérisé en ce que** la profondeur (tₙ) des rainures de maintien (13, 14) recevant sensiblement sans jeu les nervures de maintien (7, 8) est de 2 à 6 mm.

10. Joint de chaîne selon l'une quelconque des revendications 1 à 9, **caractérisé en ce que** la hauteur (hₛ) des nervures de maintien (7, 8) est d'environ 2 à 6 mm.
